# EUROPEAN PATENT APPLICATION

(11) **EP 2 299 369 A1**
(43) Date of publication of application: **23.03.2011**
(21) Application number: 09382176.7
(22) Date of filing: 22.09.2009
(51) Int. Cl.: G06F 17/28

(54) **Management, automatic translation and post-editing method**

(71) Applicant: Celer Soluciones S.L., 28008 Madrid (ES)
(72) Inventor: Silva Martinez, Roberto, 28008, MADRID (ES); Diaz de Liaño Argüelles, Enrique, 28008, MADRID (ES)
(74) Representative: Temino Ceniceros, Ignacio

(57) **Abstract**

Method for management, translation and post-edition of texts in different languages that encompasses a first corpus generation process and linguistic models (I) and a second process of translation and post-edition of documents (2). This second process simultaneously includes the initial preparation stages (21), automatic translation (22), automatic post-edition (23) and human post-edition (24). The linguistic model used for automatic post-editing (23) of the translated text is generated from the corpus generated in the first corpus and linguistic models generation process (1), so that automatic translations generated by a first automatic translator from the automatic translation stage (22), are automatically post-edited (23) by a second automatic translator before it reaches the human translator (24).

## Description

The purpose of this patent is to describe an integrated method for managing files, automatic translation and automatic post-editing that enables to obtain from one or more original language files their corresponding post-edited translation in the destination language chosen by the user.

### PRIOR STATE OF THE ART

From its beginnings more than 50 years ago, automatic translation has attempted to provide the receiver with an acceptable text for the pretended operation with greater or lesser success. Although it is true that the huge advances made in the speed and processing capabilities of computers has helped to notably improve the initial results; regarding professional translations, these have always ran into an obstacle that is difficult to overcome: translators resistance to edit a text that has been automatically translated instead of directly generating a translation.

The problem lies in the fact that it is quicker and more cost effective to delete the automatic translation rather than correct it. Additionally, the mental effort required to constantly change the sentences proposed by the automatic translator is greater than the effort required for producing a new translation from scratch.

However, in the last two decades, programs that use a translation memory were accepted relatively quickly. This is generally due to the fact that they do not require the translator to thoroughly post-edit a sentence; instead, they identify and automatically translate sentences that are identical or similar to ones saved in the translation memory.

Since the problem of including automatic translation in a professional translator's work flow lies in reducing the workload and the rejection of post-editing, it is essential to find a method that in some way improves automatic translation.

Automatic translators based on grammatical rules are good for constructing sentences, but they rely on an internal dictionary and new rules and terms, whose integration is very slow and complicated; beyond the reach of the majority of agencies and human translators. Additionally, incorporating new language pairs and client owned terminology or particular ownership is not an easy or short term task. Recently, statistical automatic translation programs have used the increasing processing capability of equipment for generating quality translations that are comparable to rule translators, but with a lot less effort required for adapting to new languages, terminology and ownerships, as well as minimal maintenance. However, even though the result of these two types of translators may become relatively similar, it depends on the type, subject, language pair and the original text structure and in many cases complement each other: where one properly resolves the construction of a sentence, the other provides adequate terminology. In any case, neither of them, at this moment is able to generate a translation that requires little management and post-edition for an acceptable number of languages.

In this descriptive report, the following terms, whose technical meaning is listed below for proper interpretation of the memory, have been used:
A *Corpus* is a structured set of oral or written texts, selected by using a previously defined criterion and representative of a language, usually stored in electronic format.
A *parallel Corpus* is a set of source segments and their corresponding translation. A *Dominium* is the topic or subject of the text. A *translation memory* is a set of source segments aligned with their destination. They equate to a parallel corpus. Finally, *Post-edition* is the revision of a previously translated text.

### INVENTION EXPLANATION

In order to solve the above mentioned problems, an automatic method for management, translation and post-edition of texts in different languages, that encompasses a first corpus generation process and linguistic models and a second process of translation and post-edition of documents is provided. This second process simultaneously includes the initial preparation stages: automatic translation, automatic post-edition and human post-edition. The linguistic model used for automatic post-editing of the translated text is generated from the corpus generated in the first corpus and linguistic models generation process; so that automatic translations generated by a first translator from the automatic translation stage, are automatically post-edited by a second automatic translator before it reaches the human translator for final revision.

The advantages of a linguistic rules translator combined with the terminology adaptation capability of a statistical translator is potentially one of the best approaches for reducing the translator's post-editing task as well as break professional translator resistance to post-edit texts that have been automatically translated. This is one of the possibilities of the described system. An immediate positive effect is the fact that it requires less time to perform the translation. It is required that the chosen method becomes a part of the natural work flow, which also includes programs that use translation memories. Our system integrates automatic translators and translation memories to construct a process that is transparent for the user, in which the automatic translations of a first translator are automatically post-edited by a second translator before it reaches the human translator. This will improve the sentences of the first automatic translator, thus reducing the time and difficulty of the human post-edition. In short, it does not eliminate this final human post-edition, it rather facilitates and optimizes it.

Therefore, in a way that is transparent to the user, the described method integrates a series of tasks that function in an isolated way but whose individual result is worse than the one obtained through this process. The innovation and advantages of this system lies in:
- Integration of at least two different or complementary automatic translation systems; one for traditional automatic translation, another for automatic post-edition.
- Integration of the entire process into the standard work flow of a translation agency or professional translator.
- Integration of the automatic translation with translations that use translation memories.
- Automation of the corpus and models generation process.

Other additional advantages provided through the described method lie in:
- Comprehensive management of the entire process through a web server
- Generation and management of translation files through an intermediate format
- Preparation stages for each one of the sentences; integrated within the workflow without the user having to use other tools or techniques to perform them.
- Possibility of system upgrades through new automatic translators for performing automatic translation as well as post-edition.
- Comprehensive control of the quality of the translation.
- Optimization of parameters for the models and the post-edition.

Throughout the description and claims, the word "encompasses" and its synonyms do not intend to exclude other technical characteristics, additions, components or steps. For experts in the field, other objectives, advantages and characteristics of this invention will in part be derived from the description and in part from placing the invention into practice. The following examples and drawings provide an illustration and are not intended to limit this invention. Additionally, this invention covers all the possible combinations of particular and preferred performances indicated herein.

### BRIEF DESCRIPTION OF THE DRAWINGS

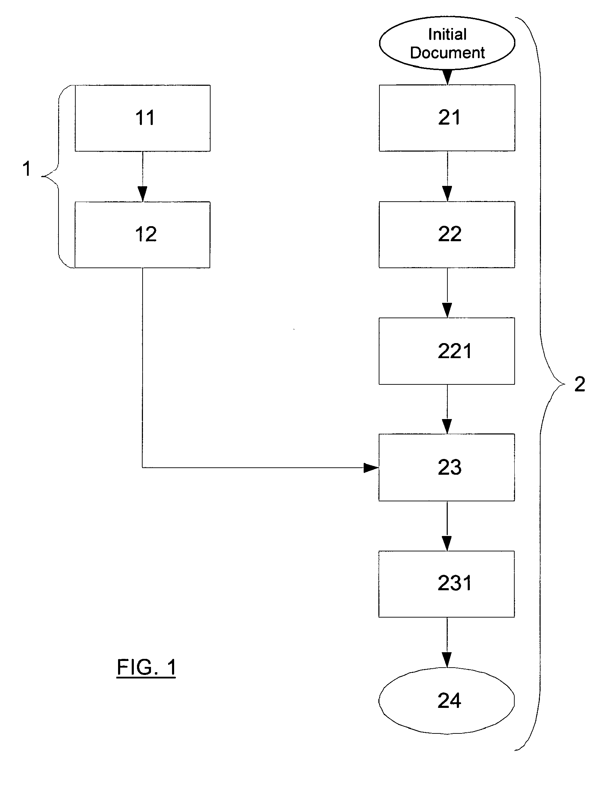

The first and only figure that accompanies this descriptive report represents the workflow from the source language document to the human post-edition in the destination language.

### DETAILED DESCRIPTION OF THE APPLICATION METHODS

As can be observed in the attached figure, the method used in this invention encompasses two parallel (1, 2) processes, which also define a series of phases or stages. In order for the method to work, it is indispensable that the existence of automatic translation mediums exist, which could or could not be based on rules, but must be different or complementary to the mediums used for automatic post-edition (23). It must have a language pair that needs to be translated, or at least enable an intermediate language through which the target language can be reached. Additionally, there should exist at least one parallel corpus in the language; and ideally, control of the text that needs to be post-edited. From this corpus, the linguistic model that is going to be used in the post-edition of the automatically translated text is generated. Finally, a linguistic model will be required for languages; and ideally, for control of the text to be post-edited.

In more detail, the method described in this invention includes a first corpus generation and linguistic models process (1), which also includes the following stages:
(i) A first stage for corpus generation (11), where the original texts and their corresponding human translations are aligned to construct a corpus; removing elements from these translations that could distort the post-edition. The original segments go through an automatic translator. The resulting segments are aligned with the source segments and the human translation; constructing a corpus with three columns: original, human translation, automatic translation. During this corpus generation stage (11), translation memories or parallel corpuses are created or adapted for the purpose of this invention. It is not always required prior to any post-edition, because if the corpus and the model exist, the automatic post-edition can be performed. This stage (11) includes one or more of the following tasks:
   a. The search for parallel corpus is an optional phase, not indispensable if a translation memory or parallel corpuses exists beforehand. The result is a parallel corpus that must be prepared during the following stage.
   b. The preparations of translation memories consists in a series of tasks, whose objective is to clean the memory in order to generate a coherent corpus, with minimal errors or problems; and ideally, without codes that are different from the source and destination texts. The system accepts translation memories in their export format, and automatically performs all the necessary stages in order to consider these memory segments apt for constructing a parallel corpus.
   c. The generation of parallel corpus consists in the conversion of the file from the previous phase in a corpus with source segments and destination segments that are perfectly aligned.
   d. The generation of automatic translations consists in translation of the corpus source segments generated in the prior phase, using an automatic translation program. The result is an aligned set of source segments and of automatic translation. This process is automatically performed by the system.
   e. The aligning of segments is the final task, whose objective is constructing a corpus with 3 columns: original segments, human translation segments, automatic translation segments. All the segments without exception are aligned and correspond with each other.
(ii) A second stage for generation of models (12), where the corpus created goes through a series of tasks that process it in order to generate the model that is to be used for the automatic post-edition (23).

The second translation and post-edition of documents (2) process also includes the initial preparation stages (21), automatic translation (22), automatic post-edition (23) and human post-edition (24), where all the stages are mandatory and are required to be performed in the listed order.

The first initial preparation (21) stage includes a set of tasks, whose aim is to prepare the documents so that the automatic translation results are the best possible. In this phase, all the documents received, in any format, are edited to ensure the original text remains unchanged during the automatic translation and post-edition process. The original document format can change in order to adapt it to the formats accepted by the automatic translation programs that are currently being used.

The second automatic translation stage (22) includes the processing of prepared documents by a first automatic translator. The result is a document translated from a source to a destination language in X format. This second stage also includes the preparation (221) or conversion of the automatically translated document to a single destination format. This format enables to assure the integrity of the content and internal format of the document in the following stages. The result is a document in format Y.

The third stage of automatic post-edition (23) consists in post-editing the document generated in the stage prior; from a source language to the same language, using a second automatic translator. The result is a source language document that is improved and equivalent to an automatic post-edition of the document. It is dependant on the existence of a post-edition model in the translation task's source and destination languages, which were generated in the first process (1). This third stage includes a series of tasks (231), whose aim is to prepare and extract the automatic post-edition segments for their integration into a translation memory. The result is a translation memory that contains the automatic post-edition segments, clearly identified so that the human translator can differentiate them from other segments coming from the memory.

Finally, the fourth stage (24) consists in post-editing the document generated in the stage prior using translation tools that use translation memories. These memories incorporate the segments originating from the automatic post-edition; therefore, it is a transparent process for the human translator. The result is a final document, post-edited in the destination language.

## Claims

**1.** An automatic method for management, translation and post-edition of texts in different languages that includes a first process of corpus generation and linguistic models (1) and a second process of translation and post-edition of documents (2), which at the same time includes the initial preparation stages (21), automatic translation (22), automatic post-edition (23) and human post-edition (24); **characterized in that** from the corpus generated in the first corpus generation and linguistic models process (1), the linguistic model to be used in the automatic post-edition (23) of the translated text are generated so that the automatic translations of a first translator from the automatic translation stage (22) are automatically post-edited (23) by a second translator before it reaches the human translator (24).

**2.** Method of claim 1 **characterized in that** the first corpus generation and linguistic models process (1) also includes the following stages:
corpus generation (11), where the original texts and their corresponding human translations are aligned to construct a corpus, removing elements from these translations that could distort the post-edition, processing the original segments with an automatic translator, while the resulting segments are aligned with original segments and the human translation, building a corpus with three columns: original, human translation, automatic translation; and
generation of models (12), where the corpus generated goes through a series of tasks that process it in order to generate the model that is to be used for the automatic post-edition (23).

**3.** Method of claim 2 **characterized in that** the corpus generation stage (11) includes at least one of the following sub-stages:
search for parallel corpus is an optional phase, not indispensable if a translation memory or parallel corpus exists beforehand, where the result is a parallel corpus that must be prepared in the following stage:
preparation of translation memories consists in a series of tasks, whose objective is to clean the memory in order to generate a coherent corpus, with minimal incoherences and without codes that are different from the source and destination texts, where translation memories in their export format are accepted, and all the necessary stages in order to consider these memory segments apt for constructing a parallel corpus are automatically performed;
generation of parallel corpuses consists in the conversion of the file from the previous phase in a corpus with source segments and destination segments:
generation of automatic translations consists in translation of the corpus source segments generated in the phase prior using an automatic translation program; where the result is a series of aligned source segments and of automatic translation; and
aligning of segments is the final task, whose objective is constructing a corpus with 3 columns: original segments, human translation segments and automatic translation segments, where the segments are aligned and correspond to each other.

**4.** Method on claim 1 **characterized in that** the first stage of initial preparation (21) includes a set of tasks aimed to prepare the documents so that the automatic translation results are the best possible and where all the received documents, in any format, are edited to ensure the original text remains unaltered during the automatic translation and post-edition process.

**5.** Method of claim 1 **characterized in that** the second stage of automatic translation (22) includes processing the documents through an automatic translator with the result being a document translated from a source language to a destination language, in X format.

**6.** Method of claim 5 **characterized in that** the second stage of automatic translation (22) also includes the preparation (221) or conversion of the automatically translated document and in X format, to a single destination format with the result being a document in Y format.

**7.** Method of claim 1 **characterized in that** the third stage of automatic post-edition (23) consists in post-editing the document generated in the automatic translation stage (22) from a source language to the same language, using a second automatic translator.

**8.** Method on claim 7 **characterized in that** the third stage of automatic post edition includes a series of tasks (231) aimed to prepare and extract the automatic post-edition segments for their integration into a translation memory that contains the automatic post-edition segments; clearly identified so that the human translator (24) can differentiate them from other memory segments.
